# EUROPEAN PATENT SPECIFICATION

(11) **EP 2 980 158 B1**
(45) Date of publication and mention of the grant of the patent: **27.09.2023**
(21) Application number: 14775645.6
(22) Date of filing: 27.03.2014
(51) Int. Cl.: C08L 69/00, C08L 67/04, C08L 33/04, C08J 5/00

(54) **RESIN COMPOSITION CONTAINING POLYALKYLENE CARBONATE**
HARZZUSAMMENSETZUNG MIT POLYALKYLENCARBONAT
COMPOSITION DE RÉSINE CONTENANT DU POLY(CARBONATE D'ALKYLÈNE)

(30) Priority: 27.03.2013 KR 20130033104
(43) Date of publication of application: 03.02.2016
(73) Proprietor: LG Chem, Ltd., Seoul 150-721 (KR)
(72) Inventor: SEO, Jin-Hwa, Daejeon 305-738 (KR); PARK, Seung Young, Daejeon 305-738 (KR); CHO, Hyun Ju, Daejeon 305-738 (KR)
(74) Representative: Goddar, Heinz J.
(86) International application number: PCT/KR2014/002613
(87) International publication number: WO 2014/157962

(56) References cited:
- JP-A- 2006 265 395
- JP-A- 2007 231 149
- KR-A- 20020 053 820
- KR-A- 20090 114 479
- KR-A- 20100 071 718
- KR-A- 20110 081 235
- US-A1- 2012 059 078
- DATABASE WPI Week 200676 Thomson Scientific, London, GB; AN 2006-735199 XP002762653, & JP 2006 265395 A (TORAY IND INC) 5 October 2006 (2006-10-05)
- Greg Saunders ET AL: "Fundamentals and Properties of Size-Exclusion Chromatography Packings and Columns", LCGC, vol. 30, no. 4, 1 April 2012 (2012-04-01), pages 46-53, XP055595760,

## Description

### Technical Field

The present invention relates to a resin composition including polyalkylene carbonate, and, more specifically, to a resin composition including polyalkylene carbonate, polylactide and polymethylmethacrylate, which exhibits excellent biodegradability, mechanical properties, and transparency.

### Background Art

Unlike aromatic carbonate that is an engineering plastic, polyalkylene carbonate, which is an amorphous transparent resin, is advantageous in that it exhibits biodegradability, it can be thermally decomposed at low temperature, and it is completely decomposed into carbon dioxide and water, thus leaving no other carbon residues.

Meanwhile, polyalkylene carbonate has excellent transparency, tensile strength, elasticity, an oxygen barrier property and the like; but is disadvantageous in that, since a blocking phenomenon occurs when it is formed into a pellet or film, it is not easy to treat, and its dimensional stability deteriorates.

For this reason, attempts to mix polyalkylene carbonate with different kinds of biodegradable resins capable of improving the physical properties of polyalkylene carbonate, for example, polylactide have been conducted. Since a polylactide (or polylactic acid) resin is based on biomass unlike conventional crude oil-based resins, it can be used as a recycled resource, it discharges a small amount of CO₂ (global warming gas) compared to conventional resins, it is biologically decomposed by water and microbes when it is buried in the ground, that is, it is environmentally friendly, and it has proper mechanical strength similar to that of conventional crude oil-based resins.

Such a polylactide resin has generally been used for disposable packages/containers, coating and foaming films/sheets, and fibers. Recently, efforts to semipermanently use a polylactide resin for mobile phone exterior materials or automobile interior materials after enhancing the physical properties thereof by mixing the polylactide resin with a conventional resin such as ABS, polypropylene or the like have actively been made. However, a polylactide resin is still restricted in the application range thereof because of its own disadvantage of it being directly biodegraded by either a catalyst or water in the air.

A resin composition including polyalkylene carbonate and polylactide is problematic in that the physical properties of polyalkylene carbonate itself are rapidly deteriorated with the increase in the content of polylactide, that is, the degree of offsetting the physical properties of polyalkylene carbonate against those of polylactide increases, and the effect of improving the physical properties thereof is not sufficient.

For example, JP-H07-109413A discloses a blend of a polylactide resin and an aromatic polycarbonate resin. However, this blend is problematic in that it is difficult to realize the uniform compatibility between polylactide and aromatic polycarbonate because the difference in melt viscosity therebetween is great only when polylactide and aromatic polycarbonate are simply molten and mixed. For example, there is a problem in that molten resin is discharged from a nozzle of a mixing extruder while being pulsated, and thus it is difficult to stably pelletize the molten resin. Further, this blend is problematic in that, since it has nonpearl-like gloss, when it is mixed with a colorant and then colored, it becomes hazy and is difficult to exhibit color, thus restricting the use thereof.

Meanwhile, when polyethylene carbonate sheets are processed into an inflatable product, there is a problem in that degree of the fusion-bonding between the sheets becomes severe, thus greatly deteriorating workability and product storability. When sheets are prepared by adding polylactide to polyethylene carbonate, the problem of fusion-bonding between the sheets can be somewhat overcome, but a phenomenon of deteriorating transparency occurs. Therefore, it is necessary to develop a resin composition, which does not cause a fusion-bonding problem necessary for manufacturing inflatable products, which has excellent workability and product storability, and which can be used in manufacturing high-transparency products.

US 2012/059078 A1 discloses a resin composition for a sheet, comprising a poly(alkylene carbonate) resin obtained by copolymerization of carbon dioxide and at least one epoxide compound.

JP 2006/265395 A discloses a polyalkylene carbonate resin composition comprising (A) 20-95 wt.% of a specific polyalkylene carbonate having a C3-C6 divalent cycloalkyl group in a main chain; and (B) 5-80 wt.% of a specific polyalkylene carbonate with ethylenic groups either having or not having a C1-C6 monovalent alkyl group as a substituted group in a main chain.

### Disclosure

### Technical Problem

The present invention intends to provide a resin composition that can exhibit remarkably improved transparency while maintaining excellent biodegradability and mechanical properties.

Further, the present invention intends to provide a molded product, a film and a film laminate, each of which is prepared using the resin composition.

### Technical Solution

In order to accomplish the above objects, an aspect of the present invention provides a resin composition, comprising:
100 parts by weight of polyalkylene carbonate including a repetitive unit represented by Formula 1 below;
0.5 to 50 parts by weight of polylactide including a repetitive unit represented by formula 2 below; and
0.5 to 35 parts by weight of polymethylmethacrylate,
wherein the resin composition has a haze value of 40% or less, which was measured using its specimen having a thickness of 0.17 to 0.19 mm according to ASTM D 1003; 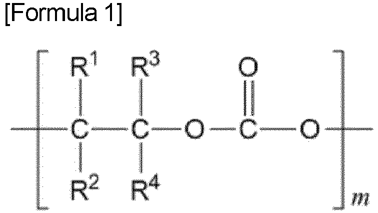
wherein R¹ to R⁴ are hydrogen, and m is an integer of 10 to 1000, 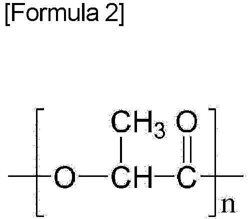
wherein n is an integer of 10 to 1000.

Another aspect of the present invention provides a molded product prepared using the resin composition.

Still another aspect of the present invention provides a film laminate, including a film prepared using the resin composition.

Hereinafter, the present invention will be described in detail.

The polyalkylene carbonate resin used in the present invention is a resin including a repetitive unit of Formula 1 below: 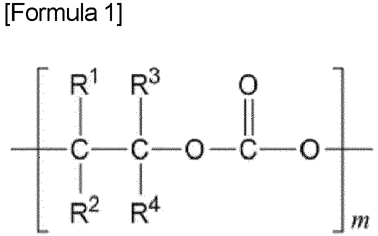 wherein R¹ to R⁴ are hydrogen, and m is an integer of 10 to 1000.

The polyalkylene carbonate may be obtained by copolymerizing an epoxide compound and carbon dioxide in the presence of an organic metal catalyst. The epoxide compounds includes ethylene oxide, propylene oxide, 1-butene oxide, 2-butene oxide, isobutylene oxide, 1-pentene oxide, 2-pentene oxide, 1-hexene oxide, 1-octene oxide, cyclopentene oxide, cyclohexene oxide, styrene oxide, butadiene monoxide, etc. The polyalkylene carbonate may be: a single polymer including the repetitive unit represented by Formula 1 above; a copolymer including two or more kinds of repetitive units within the scope of Formula 1 above; or a copolymer including an alkylene oxide-based repetitive unit together with the repetitive unit represented by Formula 1 above.

However, in order for polyalkylene carbonate to maintain its own physical properties (for example, biodegradability, low glass transition temperature, and the like) attributable to the repetitive unit represented by Formula 1 above, the polyalkylene resin may be a copolymer including the repetitive unit represented by Formula 1 above in an amount of about 40 mol% or more, preferably about 60 mol% or more, and more preferably about 80 mol% or more.

In the repetitive unit represented by Formula 1 above, R¹ to R⁴ are hydrogen.

When the functional group is hydrogen, it may be more advantageous in terms of biodegradability. As a specific example, it has been reported in the paper [Inoue et al. Chem. Pharm. Bull, Jpn, 1983, 31, 1400; Ree et al. Catalysis Today, 2006, 115, 288-294] that polyethylene carbonate is more rapidly biodegraded than polypropylene carbonate.

Further, in the polyalkylene carbonate, the polymerization degree "m" of the repetitive unit represented by Formula 1 above is 10 to 1 ,000, and preferably 50 to 500. The polyalkylene carbonate including this repetitive unit may have an weight-average molecular weight of 10,000 to 1,000,000 g/mol, and preferably 50,000 to 500,000 g/mol. Since the polyalkylene carbonate has the above polymerization degree and weight-average molecular weight, the molded product obtained therefrom may exhibit biodegradability together with mechanical properties such as strength and the like.

The method of preparing polyalkylene carbonate according to the present invention is not particularly limited, but, for example, polyalkylene carbonate may be obtained by copolymerizing alkylene oxide and carbon dioxide, or may be obtained by the ring-opening polymerization of cyclic carbonate. The copolymerization of alkylene oxide and carbon dioxide may be performed in the presence of a metal complex compound of zinc, aluminum, cobalt or the like.

When the polyalkylene carbonate is included in an excessively small amount compared to polylactide or polymethylmethacrylate, the intrinsic mechanical properties of polyakylene carbonate, such as high elongation, high flexibility and the like, may be lost.

The polylactide used in the present invention is a single polymer or a copolymer including a repetitive unit represented by Formula 2 below: 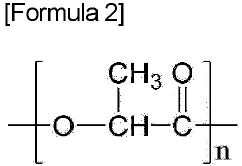 wherein n is an integer of 10 to 1000.

The molecular structure of polylactide may contain L-lactic acid monomers and/or D-lactic acid monomers. Polylactide may be prepared by a process including the step of forming the repetitive unit of Formula 2 above by the ring-opening polymerization of lactide monomers. The polymer obtained after the completion of the ring-opening polymerization and the repetitive unit formation process may be referred to as "polylactide" or "polylactide resin". In this case, the category of lactide monomers may include all of the above mentioned types of lactides.

The category of the polymer referred to as "polylactide resin may include all the polymers obtained after the completion of the ring-opening polymerization and the repetitive unit formation process, for example, unpurified or purified polymers obtained after the completion of the ring-opening polymerization, polymers included in a liquid or solid resin composition before the formation of a product, polymers included in plastic or textile after the formation of a product, and the like.

The "lactide monomers" may be defined as follows. Generally, lactides may be classified into L-lactide composed of L-lactic acid, D-lactide composed of D-lactic acid and meso-lactide composed of L-lactic acid and D-lactic acid. Further, a mixture of L-lactide and D-lactide of 50: 50 is referred to as "D,L-lactide" or "rac-lactide". It is known that, when L-lactide or D-lactide having high optical purity, among these lactides, is polymerized, L- or D-polylactide (PLLA or PDLA) having high stereoregularity is obtained, and that the polylactide obtained in this way is rapidly crystallized and has high crystallinity compared to polylactide having low optical purity. However, in the present specification, the "lactide monomers" include all types of lactides regardless of the difference in characteristics of lactides according to the types thereof and the difference in characteristics of polylactides derived therefrom.

In the polylactide resin, the polymerization degree "n" of the repetitive unit of Formula 2 above is 10 to 1,000, and preferably 50 to 500. The polylactide resin including this repetitive unit may have an weight-average molecular weight of 10,000 to 1,000,000 g/mol, and preferably 50,000 to 500,000 g/mol. Since the repetitive unit and the polylactide resin have the above polymerization degree and weight-average molecular weight, respectively, the resin layer and disposable resin molded product obtained therefrom may exhibit biodegradability together with mechanical properties such as strength and the like.

As methods of preparing a polylactide resin, a method of directly polycondensing lactic acid and a method of ring-opening polymerizing lactide monomers in the presence of an organic metal catalyst are known. Among these methods, the method of directly polycondensing lactic acid is problematic in that the viscosity of a reaction product rapidly increases with the advance of polycondensation, and thus it is difficult to remove water (by-product). Therefore, when this method is used, it is difficult to obtain a high molecular weight polymer having a weight-average molecular weight of 100,000 or more, and thus it is difficult for a polylactide resin to have sufficient physical and mechanical properties.

Meanwhile, the method of ring-opening polymerizing lactide monomers is complicated and needs high cost compared to the method of directly polycondensing lactic acid because lactide monomers must be previously prepared from lactic acid. However, when this method is used, a polylactide resin having a relative large molecular weight can be easily obtained by the ring-opening polymerization of lactide monomers using a metal catalyst, and the polymerization rate thereof can be easily adjusted. Therefore, this method is commercially widely used.

As such, the resin composition of the present invention includes polyalkylene carbonate and polylactide, thus exhibiting excellent physical and mechanical properties. Therefore, this resin composition can be semi-permanently used for sheets, food packaging films, flooring materials, electronic product packaging materials, automobile interior materials, and the like.

The polylactide is included in an amount of 0.5 to 50 parts by weight, preferably, 5 to 45 parts by weight, based on 100 parts by weight of polyalkylene carbonate.

When the polylactide is included in an amount of less than 0.5 parts by weight, physical and mechanical properties, which can obtained by the addition of polylactide, may be deteriorated, dimensional stability and thermal stability may be deteriorated, and a blocking phenomenon may become severe. Further, when the polylactide is included in an amount of more than 50 parts by weight, gas barrier properties and elongation may be deteriorated, and transparency may become low.

Meanwhile, a conventionally known resin composition including polyalkylene carbonate and polylactide is problematic in that intrinsic mechanical properties of polyalkylene carbonate are rapidly deteriorated with the increase in the content of polylactide, that is, the degree of offset of physical properties by the addition of polylactide is increased. In contrast, the resin composition of the present invention includes all polyalkylene carbonate, polylactide and polymethylmethacrylate, thus exhibiting excellent physical and mechanical properties. Therefore, this resin composition can be semi-permanently used for sheets, food packaging films, flooring materials, electronic product packaging materials, automobile interior materials, and the like.

The monomer of polymethylmethacrylate is an ester of methacrylic acid and an alkyl group of 1 carbon atom.

The polymethylmethacrylate is included in an amount of 0.5 to 35 parts by weight, preferably, 1.0 to 30.0 parts by weight, based on 100 parts by weight of polyalkylene carbonate.

When the polymethylmethacrylate is included in an amount of less than 0.5 parts by weight, dimensional stability and thermal stability may be deteriorated, a blocking phenomenon may become severe, and transparency may be deteriorated. Further, when the polyalkyl(meth)acrylate is included in an amount of more than 35 parts by weight, gas barrier characteristics and impact strength may be deteriorated.

Meanwhile, the resin composition according to an embodiment of the present invention includes the above-mentioned polyalkylene carbonate, polylactide and polymethylmethacrylate. When this resin composition is formed into a specimen having a thickness of 0.17 to 0.19 mm, the haze value of the specimen measured according to ASTM D 1003 is 40% or less. Preferably, the haze value thereof may be 10 to 40%, and, more preferably, the haze value thereof may be 20 to 40% or 20 to 30%. When the specimen prepared from the resin composition of the present invention has the above haze value range, this resin composition can be appropriately used for goods requiring high transparency, such as plastic bowls, packaging materials, films, film laminates and the like.

Further, according to an embodiment of the present invention, when this resin composition is formed into a specimen, the elongation of the specimen measured according to ASTM D 882 may be 30 to 250%, 50 to 250% or 100 to 250%, and the tensile strength thereof may be 100 to 300 kgf/cm² or 120 to 300 kgf/cm². When the specimen prepared from the resin composition of the present invention has the above elongation range and tensile strength range, this resin composition can sufficiently satisfy the mechanical properties necessary for molded products, films and the like.

Meanwhile, various kinds of additives may be added to the resin composition of the present invention according to the use thereof. Examples of the additives may include, but are not limited to, additives for reforming, colorants (pigment, dye, etc.), fillers (carbon black, titanium oxide, talc, calcium carbonate, clay, etc.), and the like. Examples of the additives for reforming may include a dispersant, a lubricant, a plasticizer, a flame retardant, an antioxidant, an antistatic agent, a light stabilizer, an ultraviolet absorber, a crystallization promoter, and the like. These various kinds of additives may also be added when a pellet is prepared from this resin composition or when this pellet is formed into a molded product.

Examples of the articles produced from the resin composition may include films, sheets, film laminates, filaments, nonwoven fabrics, molded products, and the like.

A method of producing an article includes the steps of: preparing a resin composition; and extruding the resin composition into a film. The resin composition of the present invention may be prepared by commonly known methods. A uniform mixture may be obtained by a Henzel mixer, a ribbon blender, a blender or the like. A melt-kneading may be performed using a VAN Antonie Louis Barye mixer, a monoaxial compressor, a biaxial compressor or the like. The shape of the resin composition of the present invention is not particularly limited, and examples of the shape thereof may include a sheet, a flat panel, a pellet and the like.

Examples of the methods of obtaining a compact using the resin composition of the present invention may include injection molding, compression molding, injection-compression molding, gas injection molding, foam injection molding, inflation, T die, calendar, blow molding, vacuum molding, extrusion molding, and the like.

### Advantageous Effects

The resin composition of the present invention can exhibit remarkably-improved transparency while maintaining excellent biodegradability and mechanical properties. The film containing the resin composition can be used in various fields of disposable goods, such as packing paper, daily supplies and the like, and semi-permanent goods, such as electronic product packages, automobile interior materials and the like.

### Detailed Description of the Invention

Hereinafter, the present invention will be described in more detail with reference to the following Examples.

### Preparation of polyethylene carbonate resin

### Preparation Example 1

A polyethylene carbonate resin was prepared by copolymerizing ethylene oxide and carbon dioxide using a diethyl-zinc catalyst through the following method (Journal of Polymer Science B 1969, 7, 287; Journal of Controlled release 1997, 49, 263).

1g of a dry diethyl-zinc catalyst and 10 mL of a dioxane solvent were introduced into an autoclave reactor provided with a stirrer, and then 0.1g of purified water was added to the solution while stirring the solution. Subsequently, carbon dioxide was charged in the reactor to a pressure of about 10 atm, and then the solution was stirred at 120°C for 1 hr. Thereafter, 10g of purified ethylene oxide was added, carbon dioxide was again charged to a pressure of about 50 atm, and then temperature was adjusted to 60°C to perform a reaction. After the reaction, unreacted ethylene oxide was removed at low pressure, and the reaction product was dissolved in a dichloromethane solvent. Then, the dissolved reaction product was washed with an aqueous hydrochloric acid solution (0.1M), and then precipitated with a methanol solvent to obtain a polyethylene carbonate resin. The amount of the obtained polyethylene carbonate resin was about 15g, the formation thereof was observed by nuclear magnetic resonance (NMR) spectroscopy, and the weight-average molecular weight thereof analyzed by gel permeation chromatography (GPC) was 230,000g/mol.

### Preparation of resin composition

### Example 1

94g of polyethylene carbonate prepared in Preparation Example 1, 5g of polylactide (PLA, weight-average molecular weight: 230,000, manufactured by NatureWorks Corporation) and 1g of polymethylacrylate (PMMA, weight-average molecular weight: 86,000, manufactured by LG MMA Corporation) were mixed to prepare a resin composition.

Polyethylene carbonate was dried in a vacuum oven at 40°C for one night and then used, and polylactide and polymethylmethacrylate were dried in a vacuum oven at 70°C for 4 hours and then used.

The resin composition was formed into pellets using a twin screw extruder (BA-19, manufactured by BAUTECH Corporation). The pellets were dried in a vacuum oven at 40°C for one night to be made into a dog-bone specimen. Then, the mechanical strength of the dog-bone specimen was measured using a universal testing machine (UTM).

### Examples 2 to 6

Resin compositions were prepared in the same manner as in Example 1, except that the contents of polyethylene carbonate, polylactide and polymethylacrylate were changed.

### Comparative Examples 1 to 8

Resin compositions were prepared in the same manner as in Example 1, except that the components of each resin composition were changed, and the contents of polyethylene carbonate, polylactide and polymethylacrylate were changed.

Particularly, in Comparative Example 3, a resin composition was prepared in the same manner as in Example 1, except that polypropylene (PP, brand name: H7500, manufactured by LG Chem. Co., Ltd.)

The components included in each of the resin compositions of Examples 1 to 6 and Comparative Examples 1 to 8 and the contents thereof are given in Table 1 below.

**[Table 1]**

| Class. | PEC (g) | PLA(g) | PMMA(g) | PP(g) |
|---|---|---|---|---|
| Ex. 1 | 94 | 5 | 1 | 0 |
| Ex. 2 | 94 | 5 | 3 | 0 |
| Ex. 3 | 94 | 5 | 5 | 0 |
| Ex. 4 | 94 | 5 | 10 | 0 |
| Ex. 5 | 70 | 30 | 6 | 0 |
| Ex. 6 | 70 | 30 | 18 | 0 |
| Comp. Ex. 1 | 95 | 5 | 0 | 0 |
| Comp. Ex. 2 | 70 | 30 | 0 | 0 |
| Comp. Ex. 3 | 94 | 5 | 0 | 1 |
| Comp. Ex. 4 | 94 | 0 | 5 | 0 |
| Comp. Ex. 5 | 70 | 0 | 30 | 0 |
| Comp. Ex. 6 | 70 | 36 | 5 | 0 |
| Comp. Ex. 7 | 70 | 5 | 30 | 0 |
| Comp. Ex. 8 | 50 | 30 | 20 | 0 |

### Test for evaluating physical properties

The extrudability, pellet state and sheet processability of the resin composition specimens prepared in Examples 1 to 6 and Comparative Examples 1 to 8 were evaluated by the following method, and the tensile strength, elongation and haze thereof were measured by the following method.
(1) Extrudability: the procedure of extruding a resin composition was observed with the naked eye during the process of preparing a specimen, and then the extrudability of the resin composition was evaluated by four steps of very good (⊚), good (∘), normal (△) and poor (X).
(2) Pellet state: About 20g of a pellet including each of the resin compositions of Examples 1 to 6 and Comparative Examples 1 to 8 was put into a convention oven under a load of 200g, and then heat-treated at about 40°C for about 30 min. Thereafter, the state, blockability and the like of the pellet were observed with the naked eye, and were evaluated by four steps of very good (⊚), good (∘), normal (△) and poor (X).
(3) Sheet processability: each specimen was preheated at 170°C for 1 min and then compressed under a pressure of 300 bar for 2 min using a hot press to prepare a sheet. The prepared sheet was observed with the naked eye. When air bubbles do not exist in the sheet, it was evaluated by o, and, when air bubbles exist in the sheet, it was evaluated by X.
(4) Tensile strength (TS max, kgf/cm²): The tensile strength of each specimen was measured five times using a universal testing machine (UTM, manufactured by Instron Corporation) according to ASTM D 882. The average value of tensile strength values measured five times was given as a result.
(5) Elongation (%): The elongation of each specimen was measured five times under the same condition as in the measurement of tensile strength thereof until the specimen was cut. The average value of elongation values measured five times was given as a result.
(6) Haze (%): A specimen having a length of 5cm, a width of 5cm and a thickness of 0.18 mm was fabricated, and then the haze of the specimen was measured using a haze meter (Nippon Denshoku Corporation) according to ASTM D 1003. When light having a wavelength of 400 to 700 nm penetrated the specimen, the ratio of scattered light to total transmitted light was indicated as opacity (haze, %).

The evaluation and measurement results thereof are given in Table 2 below.

**[Table 2]**

| | Extrudability | Pellet state | Sheet processability | TS (kgf/cm²) | Elongation (%) | Haze (%) |
|---|---|---|---|---|---|---|
| Ex. 1 | ○ | ○ | ○ | 122 | 247 | 25 |
| Ex. 2 | ○ | ○ | ○ | 155 | 221 | 24 |
| Ex. 3 | ○ | ○ | ○ | 149 | 187 | 23 |
| Ex. 4 | ○ | ○ | ○ | 172 | 128 | 21 |
| Ex. 5 | ○ | ⊚ | ○ | 235 | 47 | 38 |
| Ex. 6 | ○ | ⊚ | ○ | 298 | 36 | 32 |
| Comp. Ex. 1 | ○ | ○ | ○ | 92 | 260 | 35 |
| Comp. Ex. 2 | ○ | ⊚ | ○ | 164 | 46 | 54 |
| Comp. Ex. 3 | ○ | ⊚ | ○ | 103 | 225 | 31 |
| Comp. Ex. 4 | ○ | Δ | ○ | 100 | 220 | 48 |
| Comp. Ex. 5 | ○ | ⊚ | ○ | 171 | 39 | 72 |
| Comp. Ex. 6 | ○ | ⊚ | ○ | 275 | 40 | 46 |
| Comp. Ex. 7 | ○ | ⊚ | ○ | 179 | 36 | 68 |
| Comp. Ex. 8 | ○ | ⊚ | ○ | 310 | 32 | 51 |

Referring to Table 2 above, it can be ascertained that each of the resin compositions of Examples 1 to 6 includes polyethylene carbonate, polylactide and polymethylmethacrylate (PMMA), has a low haze value of 21 to 38%, and exhibits high tensile strength and elongation.

In contrast, it can be ascertained that each of the resin compositions of Comparative Examples 1 to 8 has a high haze value compared to each of the resin compositions of Examples 1 to 6, and, particularly, the resin composition of Comparative Example 5, not including polylactide, has a very high haze value.

That is, it can be ascertained that the resin composition of the present invention include polyalkylene carbonate, polylactide and polyalkyl(meth)acrylate, has high extrudability, good pellet state and excellent processability, and has a low haze value without greatly deteriorating elongation and tensile strength.

### Test for evaluating adhesivity of film laminate

A CAM film (PEC/PLA/PMMA) was prepared using the resin composition of Example 1. In order to evaluate the adhesivity of the CAM film to a film laminate, a PEC film (PEC 100%) and a PLA film (PLA 100%) were prepared as films for lamination. Here, PEC was prepared in Preparation Example 1, and PLA (weight-average molecular weight: about 230,000, manufactured by NatureWorks Corporation) was used.

The CAM film of Example 1 was attached to each of the PEC film and PLA film, and then thermal fusion was performed to prepare a film laminate. When the film laminate was separated into its respective films by applying a force thereto, the bond strength thereof was observed with the naked eye. The results thereof are given in Table 3 below.

### <Evaluation standards>

⊚: very excellent (the film laminate is not separated even when strong force is applied
∘: excellent (the film laminate is not easily separated even when strong force is applied)
X: poor (the film laminate is easily separated even when weak force is applied)

**[Table 3]**

| Class. | Results of evaluation of adhesivity | |
|---|---|---|
| | PEC 100% | PLA 100% |
| Example 1 | ○ | ○ |
| PEC 100% | ○ | X |
| PLA 100% | X | ○ |

From Table 3 above, it can be ascertained that the adhesivity between the PEC film and the PLA film was evaluated as X (poor). However, it can be ascertained that the CAM film of Example 1 includes polyalkylene carbonate, polylactide and polyalkyl(meth)acrylate, so both the adhesivity between the CAM film and the PEC film and the adhesivity between the CAM film and the PLA film are excellent.

## Claims

1. A resin composition, comprising:
100 parts by weight of polyalkylene carbonate including a repetitive unit represented by Formula 1 below;
0.5 to 50 parts by weight of polylactide including a repetitive unit represented by formula 2 below; and
0.5 to 35 parts by weight of polymethylmethacrylate,
wherein the resin composition has a haze value of 40% or less, which was measured using its specimen having a thickness of 0.17 to 0.19 mm according to ASTM D 1003; 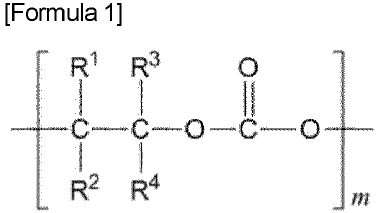
wherein R¹ to R⁴ are hydrogen, , and m is an integer of 10 to 1000, 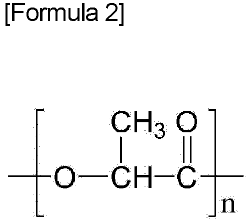
wherein n is an integer of 10 to 1000.

2. The resin composition of claim 1, further comprising at least one additive selected from the group consisting of a pigment, a dye, carbon black, titanium oxide, talc, calcium carbonate, clay, a dispersant, a lubricant, a plasticizer, a flame retardant, an antioxidant, an antistatic agent, a light stabilizer, an ultraviolet absorber, and a crystallization promoter.

3. A molded product, prepared using the resin composition of any one of claims 1 to 2.

4. A film laminate, comprising a film prepared using the resin composition of any one of claims 1 to 2.

## Patentansprüche

1. Harzzusammensetzung, umfassend:
100 Gewichtsteile Polyalkylencarbonat, das eine durch Formel 1 unten dargestellte Wiederholungseinheit einschließt;
0,5 bis 50 Gewichtsteile Polylactid, das eine durch Formel 2 unten dargestellte Wiederholungseinheit einschließt; und
0,5 bis 35 Gewichtsteile Polymethylmethacrylat,
wobei die Harzzusammensetzung einen Trübungswert von 40% oder weniger aufweist, welcher gemessen wurde unter Verwendung eines Probenkörpers mit einer Dicke von 0,17 bis 0,19 mm gemäß ASTM D 1003; 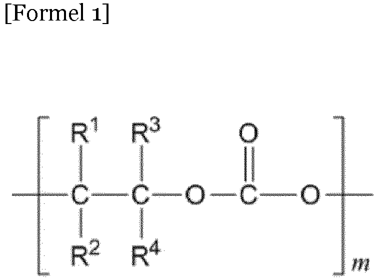
wobei R¹ bis R⁴ Wasserstoff sind und m eine ganze Zahl von 10 bis 1000 ist, 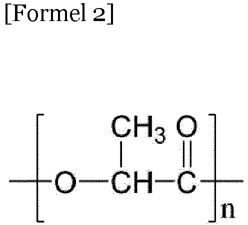
wobei n eine ganze Zahl von 10 bis 1000 ist.

2. Harzzusammensetzung nach Anspruch 1, weiter umfassend wenigstens ein Additiv, das ausgewählt ist aus der Gruppe bestehend aus einem Pigment, einem Farbstoff, Kohlenstoffruß, Titanoxid, Talk, Calciumcarbonat, Ton, einem Dispersionsmittel, einem Schmiermittel, einem Weichmacher, einem Flammhemmstoff, einem Antioxidationsmittel, einem antistatischen Mittel, einem Lichtstabilisator, einem Ultraviolettabsorber und einem Kristallisationsförderer.

3. Formprodukt, hergestellt unter Verwendung der Harzzusammensetzung nach einem der Ansprüche 1 bis 2.

4. Folienlaminat, umfassend eine Folie, die hergestellt ist unter Verwendung der Harzzusammensetzung nach einem der Ansprüche 1 bis 2.

## Revendications

1. Composition de résine polycarbonate, comprenant :
100 parties en poids de polycarbonate de polyalkylène incluant une unité de répétition représentée par la Formule 1 ci-dessous ;
entre 0,5 et 50 parties en poids de polylactide incluant une unité de répétition représentée par la formule 2 ci-dessous ; et
entre 0,5 et 35 parties en poids de polyméthylméthacrylate,
dans laquelle la composition de résine a une valeur de voile égale ou inférieure à 40 %, laquelle a été mesurée en utilisant son spécimen ayant une épaisseur comprise entre 0,17 et 0,19 mm selon ASTM D 1003 ; 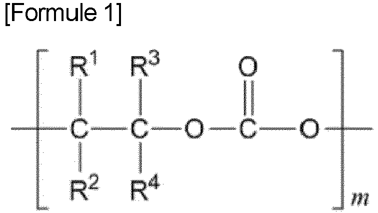
dans laquelle R¹ à R⁴ sont un hydrogène et m est un nombre entier de 10 à 1000, 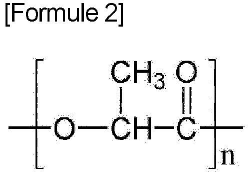
dans laquelle n est un nombre entier de 10 à 1000.

2. Composition de résine selon la revendication 1, comprenant en outre un ou plusieurs additifs sélectionnés dans le groupe constitué d'un pigment, un colorant, un noir de carbone, un oxyde de titane, un talc, un carbonate de calcium, une argile, un dispersant, un lubrifiant, un plastifiant, un retardateur de flamme, un antioxydant, un agent antistatique, un stabilisant de lumière, un absorbeur d'ultraviolets et un promoteur de cristallisation.

3. Produit moulé, préparé en utilisant la composition de résine selon l'une quelconque des revendications 1 à 2.

4. Film stratifié, comprenant un film préparé en utilisant la composition de résine selon l'une quelconque des revendications 1 à 2.
